# FASCICULE DE BREVET EUROPEEN

(11) **EP 0 697 381 B1**
(45) Date de publication et mention de la délivrance du brevet: **07.04.1999**
(21) Numéro de dépôt: 95401688.7
(22) Date de dépôt: 17.07.1995
(51) Int. Cl.: C04B 24/12

(54) **Compositions de ciment hydraulique comprenant un retardateur de prise constitué par une résine aminoplaste cyclique**
Hydraulisch abbindende Zusammensetzungen enthaltend Abbindeverzögerer auf Basis cyclischer Aminoplaste
Cementitious compositions comprising resinous cyclic amines as set retarders

(30) Priorité: 20.07.1994 FR 9408964
(43) Date de publication de la demande: 21.02.1996
(73) Titulaire: AXIM, 78930 Guerville (FR)
(72) Inventeur: Fontaine, Catherine, F-78240 Chambourcy (FR); Blanc, Alain, F-93200 Saint Denis (FR)
(74) Mandataire: Loyer, Bertrand

(56) Documents cités:
- EP-A- 0 221 537
- EP-A- 0 508 158
- WO-A-86/02921
- BG-A- 43 066
- DE-A- 1 469 469
- DE-A- 1 912 879
- DE-A- 1 933 394
- FR-A- 2 152 234
- US-A- 3 560 230
- CEMENT AND CONCRETE RESEARCH, vol. 25, no. 4, 1995 NEW YORK US, pages 685-688, BOJADJIEVA, C. ET AL
- CHEMICAL ABSTRACTS, vol. 104, no. 20, 19 Mai 1986 Columbus, Ohio, US; abstract no. 173369w, page 305; & CS-A-221 232 (T. SEBOEK ET AL) 15 Janvier 1986
- CHEMICAL ABSTRACTS, vol. 74, no. 23, 7 Juin 1971 Columbus, Ohio, US; abstract no. 125702q, page 478; & JP-A-46 001 410 (SUMITOMO CHEM CO LTD) 14 Janvier 1971
- CHEMICAL ABSTRACTS, vol. 74, no. 23, 7 Juin 1971 Columbus, Ohio, US; abstract no. 125703r, page 478; & JP-A-46 002 017 (SUMITOMO CHEM CO LTD) 19 Janvier 1971

## Description

La présente invention concerne une composition pour bétons, mortiers et/ou coulis comprenant un retardateur de prise.

Il est à rappeler qu'un retardateur de prise retarde le début de prise mais qu'il peut également jouer sur le temps de prise existant entre le début de prise et la fin de prise.

Pour de multiples raisons, l'homme du métier souhaite maîtriser le temps de prise des bétons, mortiers et/ou coulis afin d'en accroître la maniabilité.

Il est connu d'utiliser, en tant que retardateur de prise de ciment hydraulique, des dérivés hydroxylés tels que l'acide gluconique et ses sels, les acides lignosulfoniques et leurs sels, l'acide hydroxyacétique et ses sels, la diméthylolurée, le tétraméthylolglycolurile, la diméthylol 1-3 dihydroxy 4-5 imidazolidinone 2 (DMDHEU), ces dérivés utilisés en tant que retardateur de prise sont décrits dans les brevets US n° 3.560.230; 4.606.770 ainsi que dans le brevet FR 2.152.234, de même que la demande de brevet européen n° 0 508 158 décrit l'emploi d'acides phosphonoalcanetricarboxyliques et leurs sels en tant que retardateurs de prises de ciment.

Ces produits ont pour inconvénient de détériorer les propriétés physiques des bétons notamment de diminuer notablement leur résistance mécanique à la compression ou encore d'augmenter le temps entre début et fin de prise des bétons, mortiers et/ou coulis. Cette augmentation du temps de prise et de l'écart entre début et fin de prise des bétons, mortiers et/ou coulis s'avère importante pour des faibles dosages, ce qui implique une manipulation délicate. En effet, on a pu observer pour des dosages doubles de la normale des retards de prise de plusieurs jours.

L'invention a pour but une composition de ciment hydraulique comprenant un retardateur de prise permettant une maîtrise parfaite du temps de prise en fonction des doses de retardateurs utilisées.

L'originalité de l'invention porte sur le fait que lorsque l'on incorpore des résines aminoplastes cycliques dans un béton, un mortier ou un coulis, on observe un retard de prise moins sensible au dosage et plus ou moins important selon la nature de la résine utilisée.

L'invention a pour objet une composition de ciment hydraulique comprenant un retardateur de prise, caractérisée en ce que le retardateur est constitué par une résine aminoplaste cyclique de formule (I) : 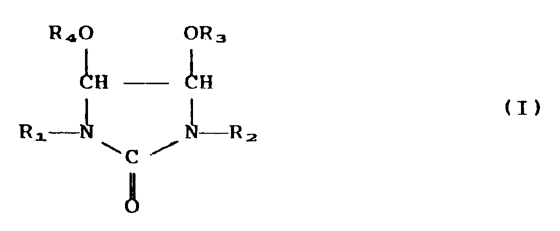 dans laquelle :
a) R₁ représente un atome d'hydrogène, un radical hydroxyméthyle ou un groupement de formule (II):

   ― CH₂ ― O ― R (II)
b) R₂ est un groupement de formule (II).
c) R de la formule (II) est un radical alcoyle linéaire ou ramifié en C₁-C₄ ou un groupement de formule (III). 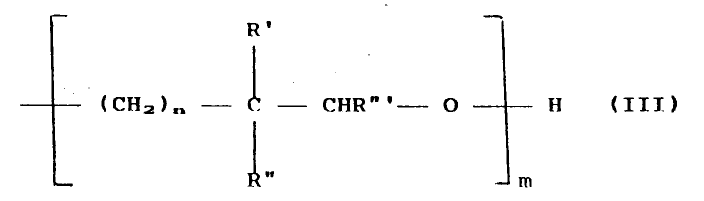
d) R₃ et R₄ qui sont soit identiques soit différents et représentent chacun un atome d'hydrogène, un radical alcoyle en C₁-C₄ linéaire ou ramifié ou un groupement de formule (III) sous leurs différentes formes stéréoisomères, c'est-à-dire selon leurs isomères cis et trans et/ou leur mélange en proportions variables.

R', R'', R''' de la formule (III) sont soit identiques soit différents et représentent un atome d'hydrogène ou un radical alcoyle linéaire ou ramifié en C₁-C₄, n est égal à O ou 1 et m est égal à 1, 2, 3 ou 4.

Le radical alcoyle en C₁-C₄ désigne un radical méthyle, éthyle, n-propyle, isopropyle, n-butyle ou isobutyle.

L'invention est encore remarquable par les caractéristiques suivantes :

R de la formule (II) représente un radical méthyle, éthyle, n-propyle, isopropyle, n-butyle, isobutyle, un groupement hydroxy-2 éthyle, hydroxy-2 propyle, ou (hydroxy-2 éthoxy)2 éthyle ou hydroxy-11 trioxa-3, 6, 9 undecanoyle sous leurs différentes formes stéréoisomères.

La résine aminoplaste cyclique de formule (I) est prise dans le groupe :
- l'hydroxyméthyl-1 méthoxyméthyl-3 dihydroxy-4,5 imidazolidinone-2, cis et ou trans,
- la bis-méthoxyméthyl-1,3 dihydroxy-4,5 imidazo-lidinone-2, cis et/ou trans,
- l'hydroxyméthyl-1 (hydroxy-2 éthoxyméthyl)-3 dihydroxy-4,5 imidazolidinone-2, cis et/ou trans,
- la bis (hydroxy-2 éthoxyméthyl)-1,3 dihydroxy-4,5 imidazolidinone-2,cis et/ou trans,
- l'hydroxymétyl-1 (hydroxy-2 éthoxy)-2 éthoxyméthyl-3 dihydroxy-4,5 imidazolidinone-2, cis et/trans,
- la bis [(hydroxy-2 éthoxy)-2 éthoxyméthyl]-1,3 dihydroxy-4,5 imidazoiidinone-2, cis et/ou trans,
- l'hydroxyméthyl-1 (hydroxy-11 trioxa-3, 6, 9 undecanoyle oxyméthyl)-3 dihydroxy-4,5 imidazolidinone-2 cis et/ou trans,
- la bis (hydroxy-11 trioxa-3, 6, 9 undecanoyle oxyméthyl) -1,3 dihydroxy-4,5 imidazolidinone-2 cis et/ou trans.

Les résines aminoplastes cycliques de formule (I) sont soit des produits commerciaux, soit des produits connus (telles que par exemples les résines aminoplastes décrites dans les brevets DE-A-19 12 879 et DE-A-19 33 394 et utilisées comme produit auxilliaire textile), soit des produits accessibles par des procédés connus tels que la méthylolation partielle ou totale de la dihydroxyéthyleneurée suivie d'une alcoylation partielle ou totale des groupements hydroxyles par l'alcool ROH où R à la signification donnée précédemment.

Parmi les alcools ROH, on peut citer plus particulièrement le méthanol, l'éthanol, le propanol-1, le butanol-1, l'éthylèneglycol, le propanediol 1, 2, le diéthylèneglycol, le triéthylèneglycol, le néopentyl-glycol, le tétraéthylèneglycol.

De plus, si l'on désigne par G le glyoxal, U l'urée, F le formaldéhyde et A l'alcool de formule ROH, les résines aminoplastes cycliques de formule (I) peuvent être définies par les rapports molaires de glyoxal, de formaldéhyde et d'alcool A mis en oeuvre pour les obtenir.

Parmi les produits de formule (I), on peut citer plus particulièrement ceux pour lesquels le rapport molaire G/U est égal à 1, le rapport molaire F/U est compris entre 1,5 et 2 et le rapport molaire A/U est compris entre 0,5 et 2.

Les résines aminoplastes cycliques de formule (I) sont habituellement préparés en solution aqueuse à Partir de solutions aqueuses commerciales de glyoxal. La condensation entre l'urée et le glyoxal est généralement effectuée à un pH compris entre 6 et 8 et à une température comprise entre 50 et 70°C. La méthylolation est effectuée généralement par introduction dans le milieu de condensation urée-glyoxal d'une solution aqueuse de formaldéhyde et l'alcoylation des groupements hydroxyles est obtenue généralement en introduisant dans le milieu réactionnel l'alcool correspondant et en ajustant le pH à une valeur inférieure à 3 (cf Encyclopedia of Chemical Technology, KIRK-OTHMER, 3ème édition, Volume 22, pages 769-803, 1983, John WILEY and Sons, Inc., New-York).

Enfin, selon une variante de l'invention, les résines aminoplastes cycliques de formule (I) peuvent être soir mélangées avec soit être complexées par un dérivé de bore choisi dans le groupe constitué par l'acide borique et ses sels de métaux alcalins et alcalino terreux et le tétraborate de sodium.

De préférence, on incorpore dans les résines aminoplastes de formule (I) de 0,1 à 1 mole d'acide borique ou l'un de ses sels de métaux alcalins ou alcalino-terreux ou de 0,025 à O,25 mole de tétraborate de sodium par mole d'urée présente dans la résine.

Les résines aminoplastes de formule (I) sont à utiliser à des dosages allant de 0,001 à 5% et de préférence de 0,01% à 1%.

Les résines aminoplastes cycliques (I) ci-dessus sous leurs différentes formes stéréoisomères, ainsi que celles contenant un dérivé du bore choisi dans le groupe constitué par l'acide borique et ses sels de métaux alcalins et alcalino-terreux et le tétraborate de sodium présentent d'intéressantes propriétés pour retarder la prise des ciments hydrauliques sans toutefois entraîner des dégradations notables des caractéristiques physiques (résistance à la compression en particulier) des bétons mortiers et coulis.

Utilisées en association avec des superplastifiants tels que les polynaphtalènes sulfonés, les polymélamines sulfonées, sans que cette liste soit limitative, les retardateurs objet de l'invention conservent leurs propriétés et ne modifient pas celles des superplastifiants.

Ces propriétés justifient l'application des résines aminoplastes cycliques de formule (I) sous leurs différentes formes stéréoisomères en tant que retardateurs de prise des ciments hydrauliques dans la fabrication des bétons mortiers et coulis.

Ces composés présentent en particulier l'intérêt d'être peu sensibles aux écarts de dosage contrairement aux autres retardateurs de prise puissants, tels que les gluconates, la DMDHEU.

Les résultats des essais effectués destinés à mettre en évidence les caractéristiques que confèrent aux mortiers, bétons et/ou coulis, les résines aminoplastes (I) figurent sur les tableaux et graphiques joints.

Le Tableau 1 représente les différents retardateurs de prise testés selon l'invention avec :
G : glyoxal
F : formaldéhyde
U : urée
A : alcool
DEG :diéthylèneglycol
MEOH : méthanol
A₁ : mélange DEG/MEOH dans les proportions molaires 53/47.

Les rapports G/U; F/U; A/U et B/U sont exprimés en rapport molaire.

Le Tableau n° 2 + graphique n° 1 représente la première série d'essais; il met en évidence l'influence du dosage en produit actif sur le début et la fin de prise sur un ciment CPA 55 ET de GAURAIN (ciment de référence choisi par l'AFNOR pour les essais d'adjuvants).

Le Tableau 3 représente la 2ème série d'essais ; il met en évidence la non nocivité des résines aminoplastes cycliques (I) obtenues par comparaison entre les résultats obtenus avec un témoin sans adjuvant et ceux obtenus avec retardateurs de prise tels que définis dans le Tableau 1.

E/C représente le rapport eau/ciment,

Rc et Rf sont les résistances à la compression et à la flexion.

Les Tableaux 4, 5 et 6 représentent la troisième série d'essai.

Le Tableau 4 met en évidence les performances des mélanges contenant un superplastifiant (PNS= polynaphtalène sulfoné) et un retardateur de prise tel que gluconate et 1, 3, 4 ; le mélange est dosé à 0,8% dans un mortier à base de ciment CPA HP de Cormeilles (ciment de référence choisi par l'AFNOR pour les essais de superplastifiant).

La composition du mélange testé est :
- polynaphtalène : 27 %
- retardateur : 2 %
- eau : 71 %

Le dosage en mélange est de 0,8 % d'où le dosage en retardateur est de 0,016 % du poids de ciment.

Le tableau 5 met en évidence l'influence d'une augmentation de dosage en mélange PNS/retardateur sur le temps de prise du mortier à base de CPA HP de Cormeilles.

La composition des mélanges est :
PNS = 27 %
Retardateur = 2%
Eau 71 %

Le Tableau 6 met en évidence l'influence du dosage du mélange PNS/retardateur sur le maintien de rhéologie.

Les essais réalisés ont été effectués selon les normes :
NF-EN 196-1 pour les résistances mécaniques
NF-P18 356-3 pour les temps de prise.

Selon la première série d'essais (Tableau 2 graphe 1), on peut remarquer une réduction de l'effet retardateur de prise à dosage équivalent.

Selon la première série d'essais (Tableau 2, graphe 1), on peut remarquer qu'en comparaison avec les retardateurs classiques, les retardateurs selon l'invention présentent à dosage équivalent un effet retardateur moindre tout en conservant un écart de temps entre début de prise et fin de prise similaire.

Selon la deuxième série d'essais (Tableau 3), on peut remarquer que les résistances en compression de mortier obtenus aux échéances de 8 et 29 jours sont équivalentes ou très légèrement inférieures à celles obtenus en présence de gluconate retardateur classique et utilisé à ce jour.

Selon la troisième série d'essais, le Tableau 4 montre que les mélanges PNS/gluconate et PNS/ 1, 3, 4 permettent un maintien de la rhéologie : sur 1h la mesure d'étalement au Flowtest reste identique. De plus, on peut remarquer un retard de prise du mélange avec 1,3 et 4 par rapport au mélange sans retardateur ainsi qu'un écart entre début et fin de prise inférieur pour le mélange contenant 1, 3, 4 au mélange contenant du gluconate. Ceci est intéressant pour l'homme du métier, car cela lui permet des décoffrages de béton plus rapides.

Du point de vue des résistances en compression les résultats obtenus avec 1, 3 et 4 sont équivalents, voire meilleurs qu'en présence de gluconates.

Le Tableau 5 montre que les composés 1, 3 et 4 conduisent à un retard de prise moindre que le gluconate et ce à des dosages de mélange de 4%; ceci prouve qu'il est possible d'utiliser ces produits à forts dosages tout en conservant des résistances à court terme.

Le Tableau 6 montre qu'au dosage de 0,8 %, les mélanges de PNS et de retardateur classique ou de retardateur selon l'invention sont sensiblement équivalents. Il est à noter cependant qu'à un dosage de 4%, le mélange à base de gluconate est légèrement plus fluide. Cependant, la perte de rhéologie entre To et 60' est la même, quel que soit le retardateur utilisé.

**Tableau 1**

| | 1 | 2 | 3 | 4 | 5 | 6 |
|---|---|---|---|---|---|---|
| ^{G/}U | 1 | 1 | 1 | 1 | 1 | 1 |
| ^{F/}U | 1,5 | 1,5 | 1,5 | 1,5 | 1,5 | 2 |
| ^{A/}U | 0,7 | 0,7 | 1,2 | 1,2 | 1,5 | 0,66 |
| A | DEG | DEG | DEG | DEG | A₁ | MeOH |
| ^{B/}U | | 0,5 | | 0,5 | | |

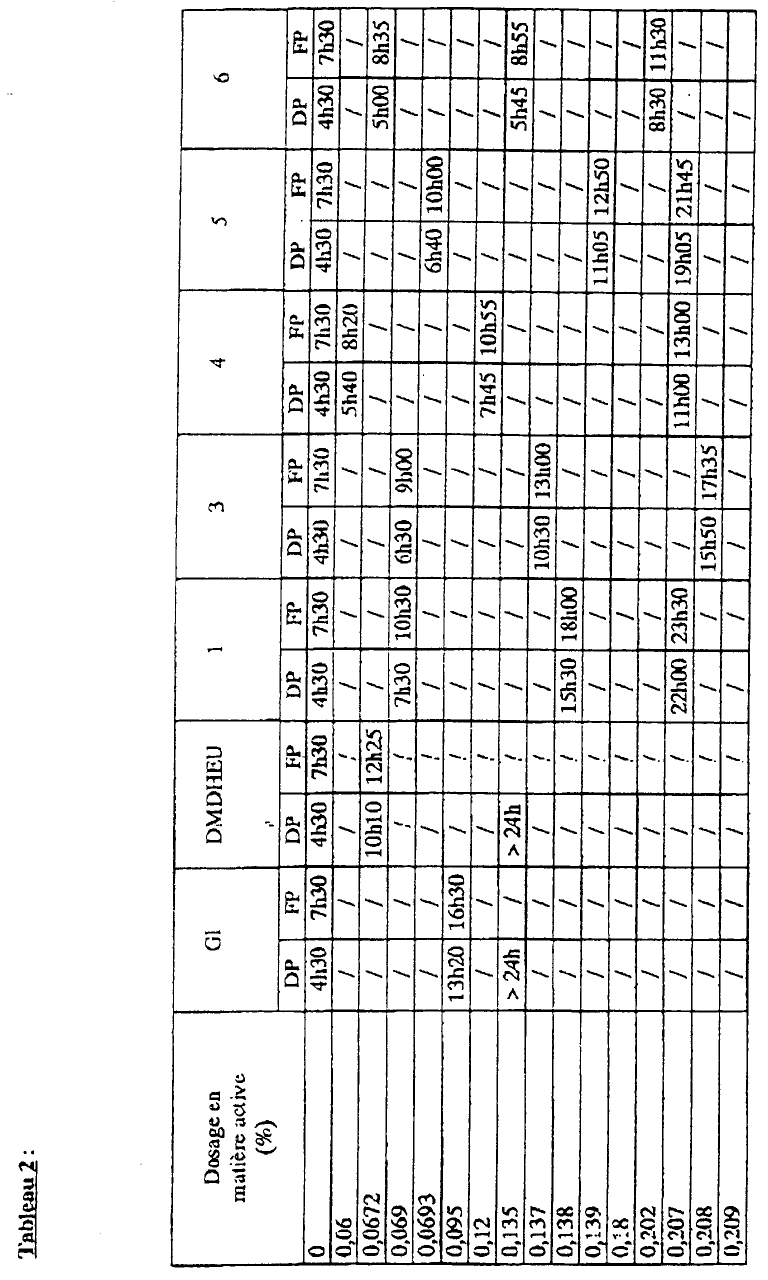

**Tableau 3**

| | Témoin sans adjuvant | G | 1 | 3 | 4 | 5 |
|---|---|---|---|---|---|---|
| Dosage en matière active (%) | / | 0,095 | 0,138 | 0,137 | 0,12 | 0,139 |
| E/C (g/cm²) | 0,5 | 0,5 | 0,5 | 0,5 | 0,5 | 0,5 |
| RC 8 j (MPa) | 51,0 | 46,1 | 49,3 | 47,2 | 43,7 | 42,7 |
| RC 29 j (MPa) | 63,3 | 62,7 | 62,0 | 60,0 | 56,5 | 55,4 |

**Tableau 4**

| Retardateur | Prise | | RC (MPa) | | | | Flow test (10 coups) | | |
|---|---|---|---|---|---|---|---|---|---|
| | DP | FP | 1 j | 7 j | 28 j | 90 j | To | + 30' | + 60' |
| Sans adjuvant | 4h50 | 7h50 | 20,7 | 57,1 | 73,8 | 79,5 | / | / | / |
| G | 6h20 | 8h35 | 20,6 (100 %) | 56,7 (99 %) | 72,7 (99 %) | 79,9 (100 %) | 210 | 185 | 175 |
| 1 | 5h40 | 7h40 | 24,0 (100 %) | 59,0 (103 %) | 77,5 (105 %) | 82,1 (103 %) | 205 | 185 | 170 |
| 3 | 5h10 | 7h35 | 18,8 (91 %) | 56,7 (99 %) | 72,4 (98 %) | 79,2 (99,6 %) | 210 | 185 | 170 |
| 4 | 5h30 | 7h30 | 19,8 (96 %) | 57,8 (101 %) | 73,8 (100 %) | 80,0 (100,6 | 210 %) | 180 | 170 |

**Tableau 5**

| E/C | Dosage (% / poids de ciment) | G | | 1 | | 3 | | 4 | |
|---|---|---|---|---|---|---|---|---|---|
| | | DP | FP | DP | FP | DP | FP | DP | FP |
| 0,5 | 0,8 | 6h20 | 8h35 | 5h40 | 7h40 | 5h10 | 7h35 | 5h30 | 7h30 |
| 0,40 | 2,0 | 10h30 | 13h00 | 10h20 | 12h35 | 8h45 | 10h00 | 7h45 | 9h35 |
| 0,38 | 4,0 | > 60h00 | / | 45h00 | / | 45h00 | / | 30h00 | / |

**Tableau 6**

| Dosage en mélange (PNS/retardateur) (%) | E/C | Retardateur | Flow test (10 coups) | | | |
|---|---|---|---|---|---|---|
| | | | To | + 30' | + 60' | + 90' |
| 0,8 | 0,5 | G | 210 | 185 | 175 | / |
| | | 1 | 205 | 185 | 170 | / |
| | | 3 | 210 | 185 | 170 | / |
| | | 4 | 210 | 180 | 170 | / |
| 4,0 | 0,38 | G | 190 | 185 | 180 | 175 |
| | | 1 | 180 | 170 | 165 | 160 |
| | | 3 | 180 | 170 | 165 | 160 |
| | | 4 | 180 | 175 | 170 | 165 |

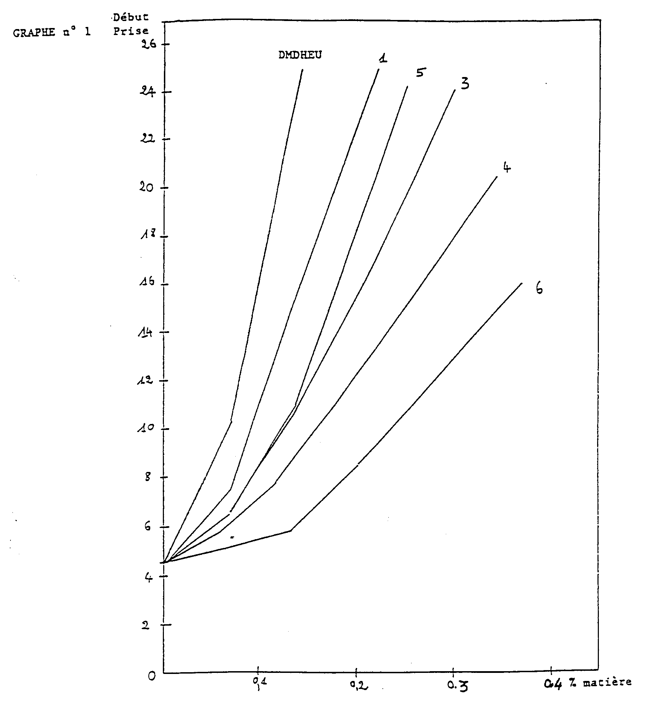

## Revendications

1. Composition de ciment hydraulique comprenant un retardateur de prise constitué par une résine aminoplaste cyclique de formule (I) : 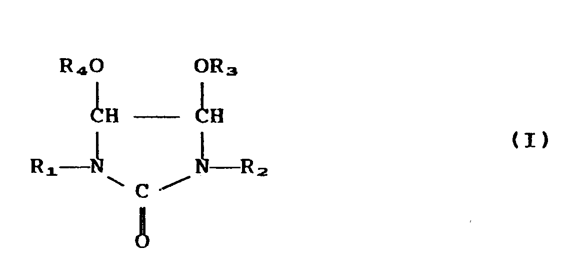
a) R₁ représente un atome d'hydrogène, un radical hydroxyméthyle ou un groupement de formule (II)
― CH₂ ― O ― R (II)
b) R₂ est un groupement de formule (II)
c) R est un radical alcoyle en C₁-C₄ linéaire ou ramifié ou un groupement de formule (III) 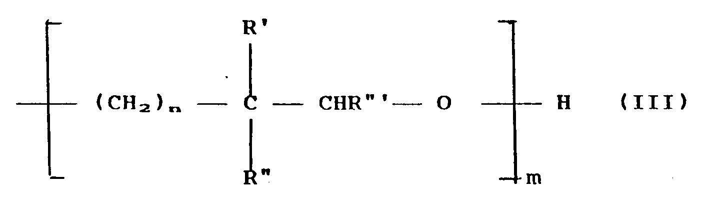 d) R₃ et R₄ sont chacun un atome d'hydrogène, un radical alcoyle en C₁-C₄ linéaire ou ramifié ou un groupement de formule (III).

2. Composition selon la revendication 1, caractérisée en ce que R₃ et R₄ sont identiques.

3. Composition selon la revendication 1, caractérisée en ce que R' R'' R''' représentent chacun un atome d'hydrogène, un radical alcoyle linéaire ou ramifié en C₁-C₄ , n est égal à 0 ou 1 et m est égal à 1, 2, 3 ou 4.

4. Composition selon la revendication 3, caractérisée en ce que R' R'' R''' sont identiques.

5. Composition selon la revendication 1, caractérisée en ce que le radical alcoyle en C₁-C₄ linéaire ou ramifié désigne un radical méthyle, éthyle, n-propyle, isopropyle, n-butyle, isobutyle.

6. Composition selon la revendication 1, caractérisée en ce que R est un radical méthyle, éthyle, n-propyle, isopropyle, n-butyle, isobutyle, ou encore un groupement hydroxy-2 éthyle, hydroxy-2 propyle ou (hydroxy-2 éthoxy)2 éthyle ou hydroxy-11 trioxa-3, 6, 9 undecanoyle sous leurs différentes formes stéréoisomères.

7. Composition selon la revendication 1, caractérisée en ce que les résines aminoplastes cycliques de formule (I) sont prises dans le groupe :
- l'hydroxyméthyl-1 méthoxyméthyl-3 dihydroxy-4,5 imidazolidinone-2, cis et/ou trans,
- la bis-méthoxméthyl-1,3 dihydroxy-4,5 imidazolidinone-2, cis et/ou trans,
- l'hydroxyméthyl-1 (hydroxy-2 éthoxyméthyl)-3 dihydroxy-4,5 imidazolidinone-2, cis et/ou trans,
- la bis (hydroxy-2 éthoxyméthyl)-1,3 dihydroxy-4,5 imidazolidinone-2, cis et/ou trans,
- l'hydroxyméthyl-1 (hydroxy-2 éthoxy)-2 éthoxymétyl-3 dihydroxy-4,5 imidazolidinone 2, vis et/ou trans,
- la bis [(hydroxy-2 éthoxy)-2 éthoxyméthyl]-1,3 dihydroxy-4,5 imidazolidinone-2, cis et/ou trans,
- l'hydroxyméthyl-1 (hydroxy-11 trioxa-3, 6, 9 undecanoyle oxyméthyl)-3 dihydroxy-4,5 imidazolidinone-2 cis et/ou trans,
- la bis (hydroxy-11 trioxa-3, 6, 9 undecanoyle oxyméthyl) -1,3 dihydroxy-4,5 imidazolidinone-2 cis et/ou trans.

8. Composition selon l'une quelconque des revendications précédentes, caractérisée en ce que les résines aminoplastes cycliques de formule (I) sont obtenues pour des procédés connus tels que la méthylolation partielle ou totale de la dihydroxyéthyleneurée suivie d'une alcoylation partielle ou totale des groupements hydroxyles par un alcool ROH où R est défini tel que selon la revendication 1.

9. Composition selon l'une quelconque des revendications précédentes, caractérisée en ce que les résines aminoplastes cycliques de formule (I) sont définies par les rapports molaires de glyoxal (G), de formaldéhylde (F), d'urée (U) et d'alcool. ROH (A) tels que si G/U = 1, alors 1,5 < F/U < 2 et 0,5 < A/U < 2.

10. Composition selon l'une quelconque des revendications précédentes, caractérisée en ce que selon une variante de réalisation les résines aminoplastes cycliques de formule (I) sont soit mélangées, soit complexées par un dérivé de bore choisi dans le groupe constitué par l'acide borique et ses sels de métaux alcalins et alcalino terreux et le tétraborate de sodium.

11. Composition selon la revendication 10, caractérisée en ce que les résines aminoplastes cycliques de formule (I) comportent par incorporation de préférence 0,1 à 1 mole d'acide borique ou l'un de ses sels de métaux alcalins ou alcalino-terreux ou 0,025 à 0,25 mole de tétraborate de sodium par mole d'urée présente dans la résine.

12. Composition selon l'une quelconque des revendications précédentes, caractérisée en ce que les résines aminoplastes de formule (I) sont à utiliser à des dosages allant de 0,001 à 5% et de préférence de 0,01 à 1%.

## Claims

1. Hydraulic cement compound comprising a setting retarder for hydraulic cements, composed of a cyclic amino resin of formula (1) 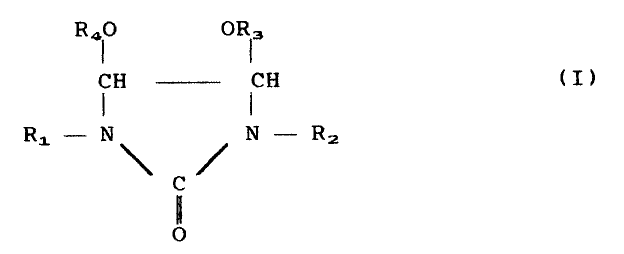 wherein
(a) R₁ is a hydrogen atom, a hydroxymethyl radical or a group of formula (II)
― CH₂ ― O ― R (II)
(b) R₂ is a group a formula (II),
(c) R is a linear or branched C₁-C₄ alkyl radical, or a group of formula (III) 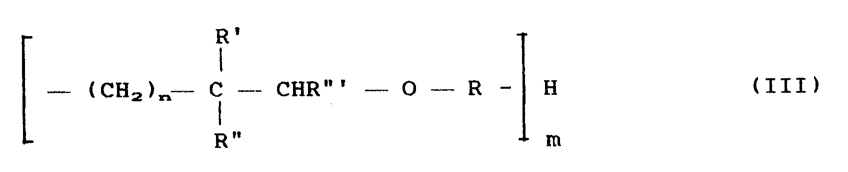
(d) R₃ and R₄ each are a hydrogen atom, a linear or branched C₁-C₄ alkyl radical or a group of formula (III).

2. Hydraulic cement compound as defined in claim 1, characterized in that R₃ and R₄ are identical.

3. Hydraulic cement compound as defined in claim 1, characterized in that R', R'' and R''' each represent a hydrogen atom, a linear or branched C₁-C₄ alkyl radical, n is 0 or 1 and m is 1, 2, 3 or 4.

4. Hydraulic cement compound as defined in claim 3, characterized in that R', R'', R''' are identical.

5. Hydraulic compound as defined in claim 1, characterized in that the linear or branched C₁-C₄ alkyl radical denotes a methyl, ethyl, n-propyl-, isopropyl-, n-butyl; or isobutyl-radical.

6. Hydraulic cement compound as defined in claim 1, characterized in that R is a methyl-, ethyl-, n-propyl-, n-butyl-, isopropyl-, isobutyl- radical or a hydroxy-2-ethyl-hydroxy-2 propyl- or (hyroxy-2 ethoxy)2 ethyl- or hydroxy-11 trioxa-3,6,9 undecanoyl-radical in their different stereoisomeric forms.

7. Hydraulic cement compound as defined in claim 1, characterized in that the cyclic amino resins of formula (I) are selected from the groups :
- cis and/or trans, hydroxymethyl-1 methoxymethyl-3 dihydroxy-4,5 imidazolidinone-2,
- cis and/or trans, bis-methoxymehtyl-1,3 dihydroxy-4,5 imidazolidinone-2,
- cis and/or trans, hydroxymethyl-1 (hydroxy-2 ethoxymethyl)-3 dihydroxy-4,5 imidazolidinone-2,
- cis and/for trans, bis(hydroxy-2 ethoxymethyl)-1,3 dihydroxy-4,5 imidazolidinone-2,
- cis and/or trans, hydroxymethyl-1 (hydroxy-2 ethoxy)-2 ethoxymethyl-3 dihydroxy-4,5 imidazolidinone 2,
- cis and/or trans, bis[(hydroxy-2 ethoxy)-2 ethoxymethyl]-1,3 dihydroxy-4,5 imidazolidinone-2,
- cis and/or trans, hydroxymethyl-1 (hydroxy-11 trioxy-3, 6, 9 undecanoyl oxymethyl)-3 dihydroxy-4,5 imidazolidinone-2,
- cis and/or trans, bislhydroxy-11 trioxy-3,6,9 undecanoyl oxymethyl)-1,3 dihydroxy-4,5 imidazolidinone-2.

8. Hydraulic cement compound as defined in any of the above claims, characterized in that the cyclic amino resins of formula (I) are prepared by known procedures such as partial or total methylolation of dihydroxyethylene-urea followed by partial or total alkylation of the hydroxyl groups by an ROH alcohol wherein R is define in claim 1.

9. Hydraulic cement compound as defined in any of the above claims, characterized in that the cyclic amino resins of formula (I) are defined by the molar ratios of glyoxal (G), formaldehyde (F) and ROH alcohol (A) to urea (U) such that if G/U = 1, then 1.5 < F/U < 2 and 0.5 < A/U < 2.

10. Hydraulic cement compound as defined in any one of the above claims, characterized in that in an embodiment variation, the cyclic amino resins of formula (I) are either mixed or complexed by a boron derivative selected from the group composed of boric acid and its salts of alkaline and earth-alkaline metals and sodium tetraborate.

11. Hydraulic cement compound as defined in claim 10, characterized in that the cyclic amino resins of formula (I) incorporate preferably 0.1 to 1 moles of boric acid or one of its salts of alkaline or earth-aklakine metals or 0.025 to 0.25 moles of sodium tetraborate per mole of urea present in the resin.

12. Hydraulic cement compound as defined in any of the above claims, characterized in that the amino resins of formula (I) are used in dosages of 0.0001 to 5 % and preferably from 0.01 to 1 %.

## Patentansprüche

1. Hydraulische Zementrusammensetzung, mit einem Abbindeverzögerer, umfassend ein zyklisches Aminoplastharz der Formel (I): 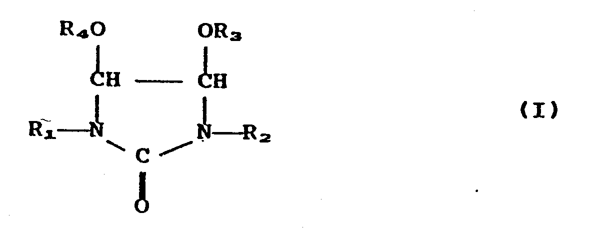 in der
a) R₁ für ein Wasserstoffatom, einen Hydroxymethylrest oder eine Gruppe der Formel (II)
-CH₂-O-R (II)
steht,
b) R₂ eine Gruppe der Formel (II) ist
c) R einen geradkettigen oder verzweigten C₁-C₄-Alkylrest oder eine Gruppe der Formel (III) 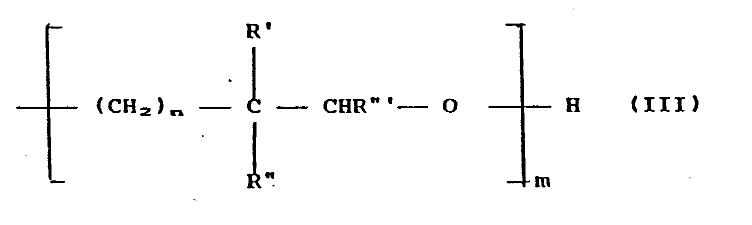 bedeutet, und
d) R₃ und R₄ jeweils für ein Wasserstoffatom, einen geradkettigen oder veaweigten C₁-C₄-Alkylrest oder eine Gruppe der Formel (III) stehen.

2. Zusammensetzung nach Anspruch 1, dadurch gekennzeichnet, daß R₃ und R₄ identisch sind.

3. Zusammensetzung nach Anspruch 1, dadurch gekennzeichnet, daß R', R'' und R''' jeweils für ein Wasserstoffatom oder einen geradkettigen oder verzweigten C₁-C₄-Alkylrest stehen, n gleich 0 oder 1 und m gleich 1, 2, 3 oder 4 ist.

4. Zusammensetzung nach Anspruch 3, dadurch gekennzeichnet, daß R', R'' und R''' identisch sind.

5. Zusammensetzung nach Anspruch 1, dadurch gekennzeichnet, daß der geradkettige oder verzweigte C₁-C₄-Alkylrest für einen Methyl-, Ethyl-, n-Propyl-, Isopropyl-, n-Butyl- oder Isobutylrest steht.

6. Zusammensetzung nach Anspruch 1, dadurch gekennzeichnet, daß R ein Methyl-, Ethyl-, n-Propyl-, Isopropyl-, n-Butyl-, Isobutylrest oder auch ein Hydroxy-2-ethyl-, Hydroxy-2-propyl- oder (Hydroxy-2-ethoxy)-2-ethyl- oder Hydroxy-11-trioxa-3,6,9-undecanoylrest in ihren verschiedenen stereoisomeren Formen ist.

7. Zusammensetzung nach Anspruch 1, dadurch gekennzeichnet, daß die zyklischen Aminoplastharze der Formel (I) aus folgender Gruppe ausgewählt sind:
- cis- und/oder trans-Hydroxymethyl-1-methoxymethyl-3-dihydroxy-4,5-imidazolidinon-2,
- cis- und/oder trans-Bis-methoxymethyl-1,3-dihydroxy-4,5-imidazolidinon-2,
- cis- und/oder trans-Hydroxymethyl-1-(hydroxy-2-ethoxymethyl)-3-dihydroxy-4,5-imidazolidinon-2,
- cis- und/oder trans-Bis-(hydroxy-2-ethoxymethyl)-1,3-dihydroxy-4,5-imidazolidinon-2,
- cis- und/oder trans-Hydroxymethyl-1-(hydroxy-2-ethoxy)-2-ethoxymethyl-3-dihydroxy-4,5-imidazolidinon-2,
- cis- und/oder trans-Bis-[(hydroxy-2-ethoxy)-2-ethoxymethyl-1,3-dihydroxy-4,5-imidazolidinon-2,
- cis- und/oder trans-Hydroxymethyl-1-(hydroxy-11-trioxa-3,6,9-undecanoyloxymethyl)-3-dihydroxy-4,5-imidazolidinon-2, und
- cis- und/oder trans-Bis-(hydroxy-11-trioxa-3,6,9-undecanoyloxymethyl)-1,3-dihydroxy-4,5-imidazolidinon-2.

8. Zusammensetzung nach einem der vorhergehenden Ansprüche, dadurch gekennzeichnet, daß die zyklischen Aminoplastharze der Formel (I) durch bekannte Verfahren erhalten werden, wie die teilweise oder vollständige Methylolierung von Diyhdroxyethylenharnstoff, gefolgt von einer teilweisen oder vollständigen Alkylierung der Hydroxylgruppen durch einen Alkohol ROH, wobei R wie in Anspruch 1 definiert ist.

9. Zusammensetzung nach einem der vorhergehenden Ansprüche, dadurch gekennzeichnet, daß die zyklischen Aminoplastharze der Formel (I) durch die Molverhältnisse von Glyoxal (G), Formaldehyd (F), Harnstoff (U) und Alkohol ROH (A) so definiert sind, daß 1,5 < F/U < 2 und 0,5 < A/U < 2, wenn G/U=1.

10. Zusammensetzung nach einem der vorhergehenden Ansprüche, dadurch gekennzeichnet, daß die zyklischen Aminoplastharze der Formel (I) gemäß einer Ausführungsvariante entweder vermischt oder mit einem Borderivat, das aus der Gruppe ausgewählt ist, die aus Borsäure und ihren Alkalimetall- und Erdalkalimetallsalzen sowie Natriumtetraborat besteht, komplexiert werden.

11. Zusammensetzung nach Anspruch 10, dadurch gekennzeichnet, daß die zyklischen Aminoplastharze der Formel (I) durch Aufnahme von vorzugsweise 0,1 bis 1 Mol Borsäure oder eines seiner Alkalimetall- oder Erdalkalimetallsalze oder 0,025 bis 0,25 Mol Natriumtetraborat pro Mol in dem Harz vorhandenen Harnstoffs aufweist.

12. Zusammensetzung nach einem der vorhergehenden Ansprüche, dadurch gekennzeichnet, daß die Aminoplastharze der Formel (I) in Mengen von 0,001 bis 5 %, vorzugsweise von 0,01 bis 1 %, zu verwenden sind.
